# EUROPEAN PATENT APPLICATION

(11) **EP 2 348 787 A1**
(43) Date of publication of application: **27.07.2011**
(21) Application number: 10305076.1
(22) Date of filing: 22.01.2010
(51) Int. Cl.: H04W 92/20

(54) **Distributing system for the communication between distributed base stations, and distributing unit therefor**

(71) Applicant: Alcatel Lucent, 75008 Paris (FR)
(72) Inventor: Pfeiffer, Thomas, 70569 Stuttgart (DE)
(74) Representative: Brose, Gerhard

(57) **Abstract**

The invention relates to a distributing system for linking a multiple of spatially distributed stations (eNB) which communicate among each other, where for communicating among each other the data destined for the rest of the concerned stations are combined to one common data stream each, that is distributed to the rest of the concerned stations by means of a distribution element via a data link, where the distribution elements dedicated to each one of the concerned stations (eNB) are aggregated spatially. The invention relates also to a distributing unit (SB) therefor.

## Description

The invention relates to a distributing system for linking a multiple of spatially distributed stations which communicate among each other, according to the preamble of claim 1, and to a distribution unit according to the preamble of claim 3.

A distributing system according to the preamble of claim 1 was described in our patent application EP 09305871.7, internal docket 805515.

There the starting point was that neighboring base stations in cellular radio networks exchange large bulks of information, conventionally via optical data links. To reach short response times,the stations in principle are fully meshed, what means that each such station is directly linked to each other station (or at least to its nearest stations).

The problem there was that each such base station needs input from neighboring stations. Retrieving such input information from the respective other base stations by known polling techniques is cumbersome and time consuming Corresponding problems may arise in other situations, where couples of stations cooperate.

Such information may be raw data like a digitized part of an input signal received at an antenna, it may be the data re ceived therefrom by demodulating such signal, it may be data obtained by evaluating feedback from mobile stations, it may be data obtained by joint processing own information and information from other base stations or the like.

In other situations the data may include environmental measuring values or statistical data.

There the information intended for all neighboring stations is multiplexed into a broadcast and sent to each such station, and each of these stations itself selects the information it needs.

Here as well as there the problem could arise in relation to other kinds of stations too, where then of course the same solution could be used. Also here, in the following both, problem as well as solution, will be described in terms of such base stations.

The conditioning of the data streams reported there is not of importance here; there is no need to describe and understand it for understanding the present invention.

As also mentioned in the above cited application it is not only the mere delay on the connecting links, but moreover the delay caused by switching and routing of the connecting links.

The more or less complete meshing of a couple of stations requires a great deal of installation of cables. It is an object of the present invention to make the network structure clearer.

This object according to the invention is achieved by a distributing system according to the teaching of claim 1, and a distribution unit according to the teaching of claim 3.

In contrast to the starting point the distribution and combining of distributed data streams is performed at one common place,from which only one (bi-directional) link extends to the single stations.

This has also the advantage that at this single place further tasks may be performed like tying the whole set of such stations to a higher level station, introducing amplifiers, switches, and the like. The chance that a potential failure in such network can be found at this single place is high and reduces OEM costs.

Further improvements and embodiments of the subject invention are to be found in the subclaims and in the following description.

In the following the invention will be described with the aid of the accompanying drawings, in which:
- Figure 1: shows a part of a control network underlying a network of base stations of a cellular radio network as described in a prior application as an example of a distributing system according to the invention.
- Figure 2: shows a part of a cellular radio network, which can be implemented as an example of a distributing system according to the invention.
- Figure 3: shows the optical part of a base station as described in the prior application.
- Figure 4: show the optical part of two base stations of the kind as depicted in figure 3 together with the connection there between.
- Figure: 5 shows an example of a distribution system according to the invention interconnecting a couple of stations including a distributing unit according to the invention, as well as an extension thereof to also connect those stations to a higher level station.
- Figure 6: shows an example of a distributing unit according to the invention including some further possible exten- sions.
- Figure 7: shows an alternative of what is shown in figure 4.
- Figure 8: shows exemplary some networks including distributing systems and distribution units according to the invention.

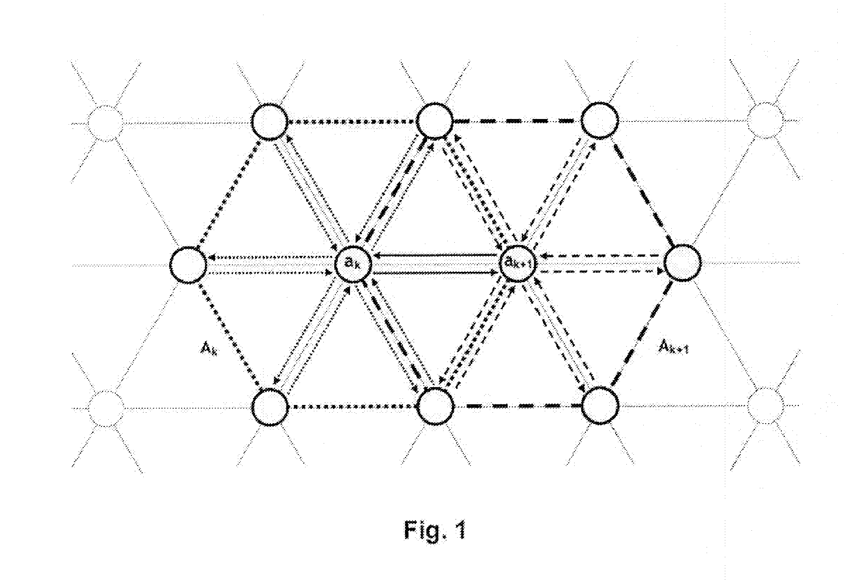

Based on figure 1 the starting point as described in the cited prior application:
Cellular radio networks mostly are illustrated as having a topology of regular hexagons, in the middle of which a base station each is situated. A control network connecting such network of base stations then also has the topology of regular hexagons, as in figure 1.

Practically such networks not only deviate therefrom in the form of the topology and in the number of neighboring stations, but also in the fact, that, depending on the actual need, there might be neighboring stations that are not directly connected and others might be directly connected without being neighbors.

A control network underlying such network of base stations of a cellular radio network is arranged in clusters with a center station and a couple of surrounding stations each. One such cluster is shown as a dotted hexagon Aₖ with a center station aₖ. An other such cluster is shown as dashed hexagon Aₖ₋₁ with a center station aₖ₊₁ The corners of these hexagons also carry base stations. Center station aₖ is connected in both directions to each of its surrounding (neighboring) stations on the dotted hexagon Aₖ by links depicted as dotted arrows; center station aₖ₊₁is connected in both directions to each of its surrounding (neighboring) stations on the dashed hexagon Aₖ₋₁ by links depicted as dashed arrows. Stations aₖ and both are center stations in their own cluster and surrounding (neighboring) stations in the respective other cluster. The counseling links are depicted as drawn through arrows. As the structure of such control network is like the structure of a cellular radio network itself, principles relating to the used resources like frequency reuse may be adopted by using resources in a recurring way.

Please note that the denominations of the elements in this figure depart from the respective denominations in the following figure.

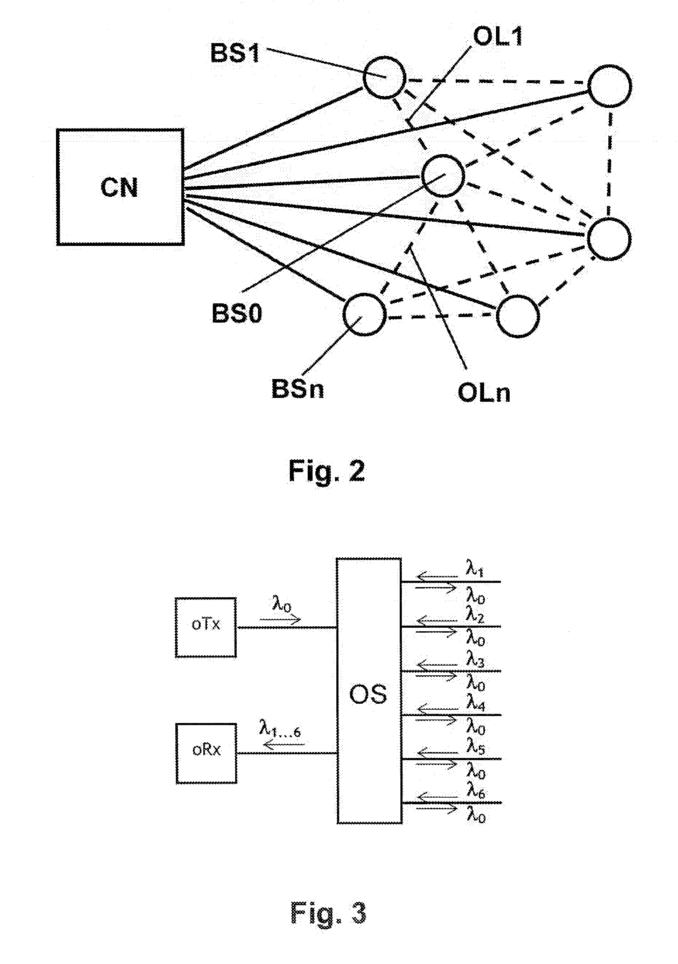

Figure 2 shows a central node CN, a base station BS0, and several other base stations BS1 to BSn. From the other base stations only BS1 and BSn are labeled.

All these base stations BS0 to BSn are directly linked (not necessarily with fibers dedicated only to such links) to the central node CN via optical links shown drawn through, but not labeled. They are in part directly linked to one another via optical links shown in dashed lines; only the optical links linking base station BS0 with base stations BS1 and BSn are labeled as OL1 and OLn respectively.

In principle all neighboring base stations are directly linked, but even this principle might be breached depending on the actual situation, e.g. when there is no road link between two neighboring radio cells. But this is not an aspect of the present invention.

Base stations not neighboring, like BS1 and BSn in this example, are not directly linked, but could be linked nevertheless, if requested.

Assuming that we use only single fibers as links for both directions between either of the base stations, an optical interface as shown in figure 3 is used between the base station and the links. An optical splitter OS combines and splits links coming from an optical transmitter oTx and going to an optical receiver oRx in the base station and combines and splits the optical fibers to and from the neighboring base stations. Such optical splitter OS would also direct the combined incoming signals to the optical transmitter oTx, but this does not disturb, apart from the power loss. Alternatively, this could be circumvented for example by inserting a suitable optical bandpass filter that blocks all alien wavelength signals.

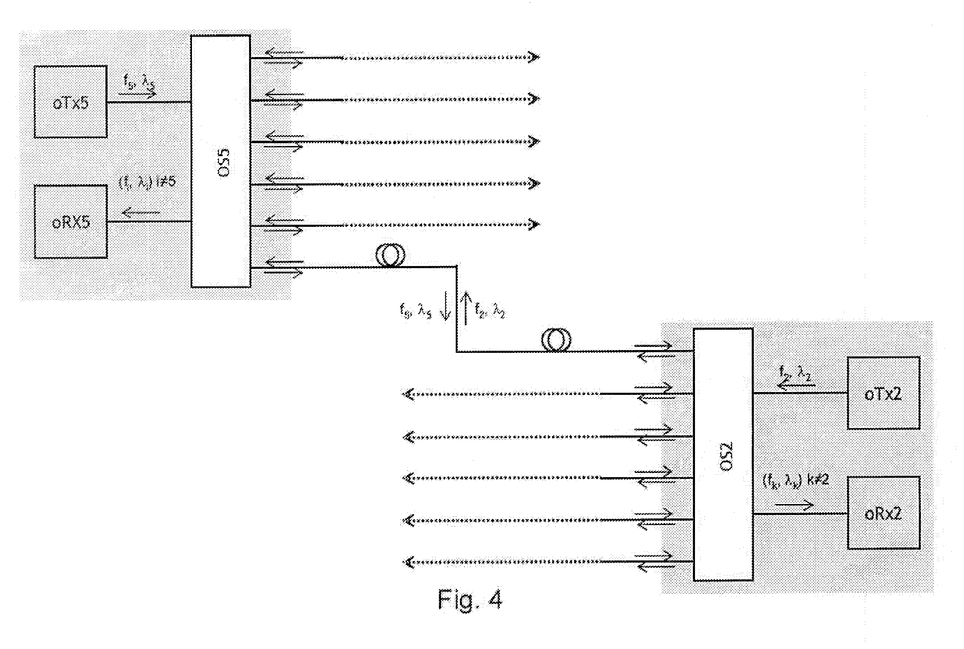

Figure 4 shows a combination of the optical parts of two base stations of the kind as depicted in figure 3 together with the connection there between. The reference signs used in figure 4 are the same as those used in figure 3 except for distinguishing extensions 2 and 5, respectively.

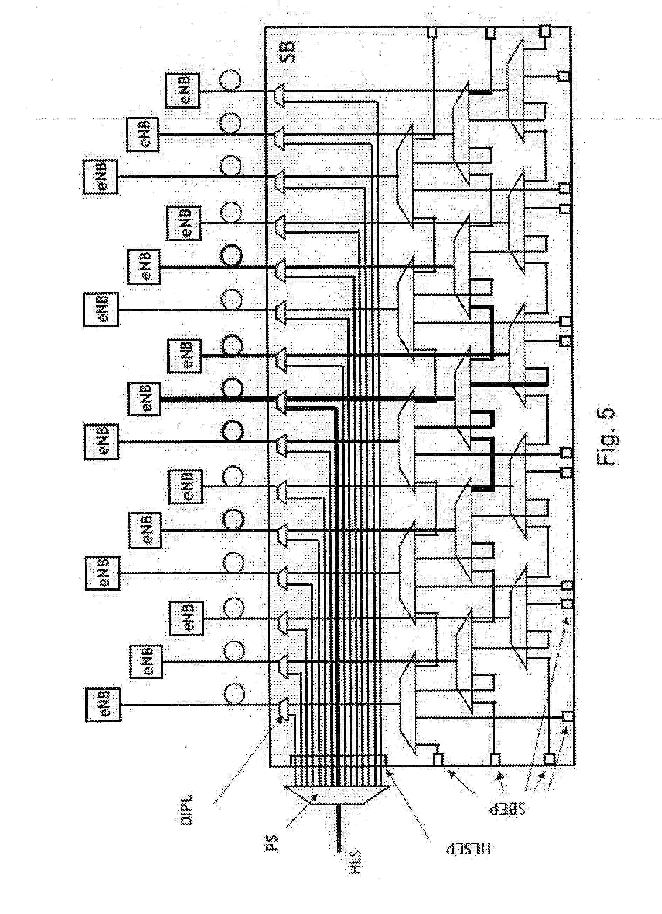

The present invention now suggests to spatially aggregating the optical splitters OSx dedicated to the individual stations together with the links interconnecting them. An advanced example of such network is shown in figure 5.

The single stations building a couple of stations here are designated as enhanced nodeBs, eNB; the optical splitters OSx here are depicted as trapezoids. The common connects of such splitters at the short parallel sides of the trapezoids are leading to the respective enhanced nodeBs, eNB; the remaining connects at the long parallel sides of the trapezoids are meshed amongst each other building a network as known form figure 4.

It is suggested to house the whole spatially aggregated parts of this network in a single housing to build a distribution unit further on called splitter box SB.

According to an other aspect of the invention in the case that the spatially distributed stations, here the enhanced nodeBs, eNB, each are connected to a common higher level station HLS the links between the higher level station and the spatially distributed stations is directed via the splitter box SB. To this extend in this example an additional power splitter PS and additional diplexers DIPL are inserted between the link to the higher level station HLS and the links to the enhanced nodeBs, eNB. Depending on power, wavelength or frequency schemes instead of the diplexers DIPL also additional inputs of the optical splitters could be used. The additional power splitter PS could also be integrated into the splitter box SB.

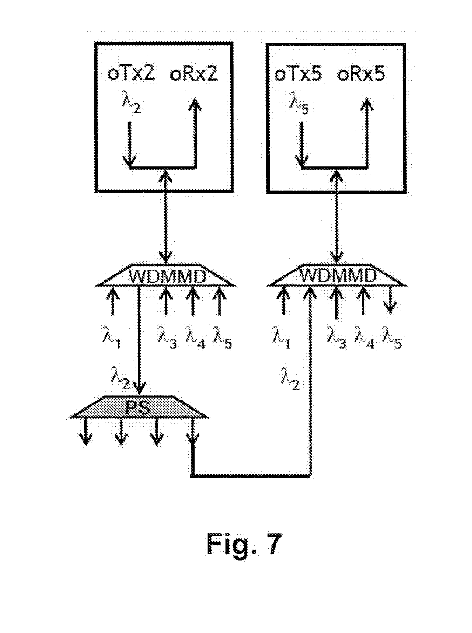

Also depending power, wavelength or frequency schemes instead of the optical splitters OS an alternative could be to use multiplexers and demultiplexers for wavelength division multiplex, WDMMD, in combination with power splitters PS. This would result in replacing the configuration shown in figure 4 with that shown in figure 7.

According to an other aspect of the invention such splitter boxes SB present inputs and outputs for extending the intermediate network by cascading the splitter boxes. Exemplary splitter box extension points SBEP and a high level station extension point HLSEP is shown.

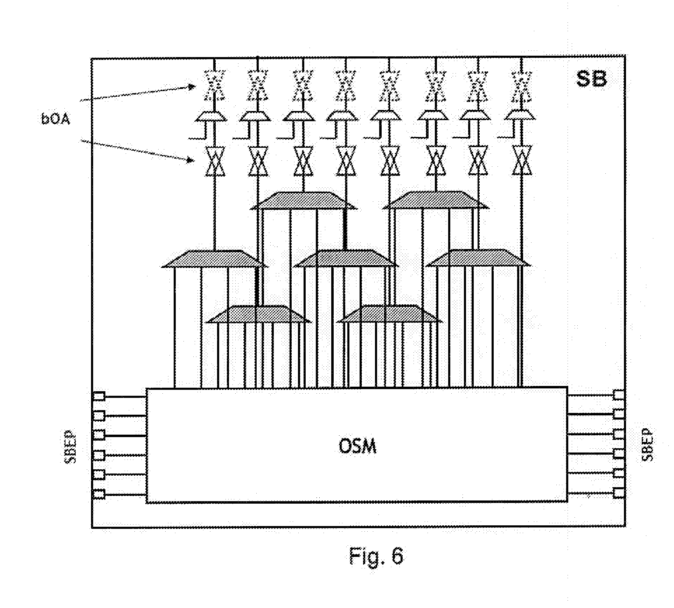

According to an other aspect of the invention such splitter boxes SB could also include further elements, the diplexers DIPL of which have already been mentioned. Figure 6 shows bidirectional optical amplifiers bOA (two possible positions are shown) and an optical switch matrix OSM as further such examples. The optical switch matrix OSM could act as remotely controllable optical jumpers. Also optical filters, as included in the diplexers DIPL could be inserted where else otherwise needed.

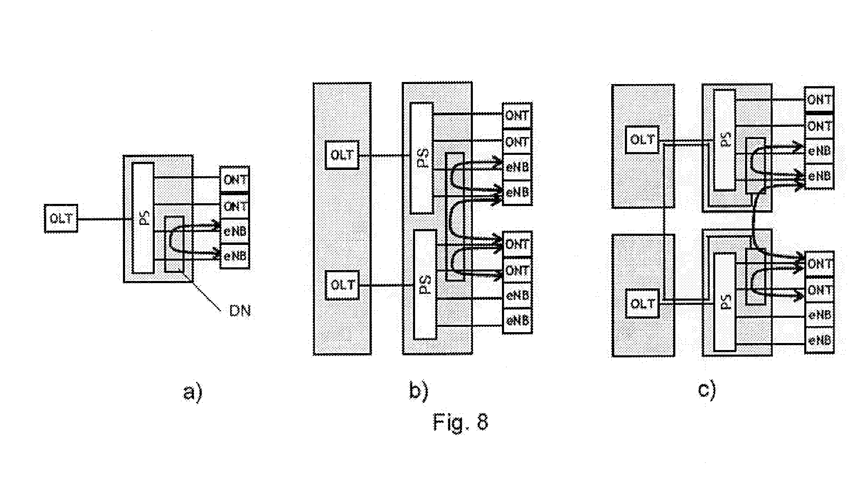

Figure 8 shows exemplary some networks including distributing systems and distribution units according to the invention. Here the higher level stations are optical line terminations OLT heading such distributing system. In addition to connecting enhanced nodeBs, eNB, also optical network terminations ONT of e.g. GPON based FTTH networks are connected to the optical line terminations OLT via splitter boxes including power splitters PS and distributing networks DN. Figures 8a, 8b, and 8c show different stages of expansion of such access network.

## Claims

1. Distributing system (fig. 2) for linking a multiple of spatially distributed stations (BS0, BSI, BSn, eNB) which communicate among each other, where for communicating among each other the data destined for the rest of the concerned stations are combined to one common data stream each, that is distributed to the rest of the concerned stations by means of a distribution element (OS, OS2, OS5; WDMMD, PS) via a data link (OL1, OLn) each, **characterized in, that** distribution elements (OS, OS2, OS5; WDMMD, PS) dedicated to one each of the concerned stations (BSO, BS1, BSn, eNB) are aggregated spatially.

2. Distributing system according to claim 1, **characterized in, that** the spatially distributed stations (BSO, BS1, BSn, eNB) each are connected to a common higher level station (HLS, OLT) and that the links (OL1, OLn) between the higher level station (HLS) and the spatially distributed stations (BS0, BS1, BSn, eNB) are directed via the spatially aggregated distribution elements (OS, OS2, OS5; WDMMD, PS).

3. Distribution unit (SP) for a distributing system according to claim 1, **characterized in, that** it includes the spatially aggregated distribution elements (OS, OS2, OS5; WDMMD, PS),

4. Distribution unit (SB) according to claim 3, **characterized in, that** the distribution elements dedicated to one each of the concerned stations are bi-directional splitting elements with the common connects foreseen for connecting the respective one of the concerned stations and meshed amongst each other via their remaining connects.

5. Distribution unit according to claim 3, **characterized in, that** it is presents inputs and outputs (SBEP, HLSEP) for being cascaded.

6. Distribution unit according to claim 3, **characterized in, that** it further includes amplifiers (bOA), switches (OSM), filters (DIPL) or the like (DIPL).

## Amended claims

### Amended claims in accordance with Rule 137(2) EPC.

**3.** Distribution unit (SB) for a distributing system (fig. 2) for linking a multiple of spatially distributed stations (BS0, BS1, BSn, eNB) which communicate among each other, where for communicating among each other the data destined for the rest of the concerned stations are combined to one common data stream each, that is distributed to the rest of the concerned stations by means of a distribution element (OS, OS2, OS5; WDMMD, PS) via a data link (OL1, OLn) each, **characterized in, that** it includes in a spatially aggregated manner the distribution elements (OS, OS2, OS5; WDMMD, PS) destined for communicating of the concerned stations among each other.

**5.** Distribution unit according to claim 3, **characterized in, that** it presents inputs and outputs (SBEP, HLSEP) for being cascaded.
